# EUROPEAN PATENT SPECIFICATION

(11) **EP 2 225 495 B1**
(45) Date of publication and mention of the grant of the patent: **07.01.2015**
(21) Application number: 08866906.4
(22) Date of filing: 27.11.2008
(51) Int. Cl.: F24C 15/32, H02K 5/24

(54) **OVEN WITH VIBRATION ATTENUATION MEANS**
OFEN MIT VIBRATIONSDÄMPFUNG
FOUR DE CUISSON AVEC MOYENS D'ATTÉNUATION DES VIBRATIONS

(30) Priority: 28.12.2007 TR 200709105
(43) Date of publication of application: 08.09.2010
(73) Proprietor: Arçelik Anonim Sirketi, 34950 Istanbul (TR)
(72) Inventor: ARSLAN, Ergin, 34950 Istanbul (TR); USLU, Ahmet, Ali, 34950 Istanbul (TR); GUL, Metin, 34950 Istanbul (TR); SERABATIR, Davut, Ayhan, 34950 Istanbul (TR)
(86) International application number: PCT/EP2008/066381
(87) International publication number: WO 2009/083360

(56) References cited:
- DE-A1- 2 460 294
- DE-A1- 10 054 955
- DE-A1- 10 229 630
- US-A- 1 901 474
- US-A- 4 161 667
- US-B1- 7 015 605

## Description

The present invention relates to an oven wherein the noise originated from the fan motor is decreased.

In domestic ovens, for example in built-in ovens, fans are used for providing homogenous heat distribution by the circulation of the hot air in the heating chamber and heat transfer by forced heat convection and cooling of the electronic devices inside the oven. The fan providing the circulation of the hot air in the heating chamber is mounted on the rear wall of the chassis, which surrounds the cooking chamber placed in the main body of the oven, is driven by a fan motor and the high magnitude vibrations; generated while the fan motor operates, cause noise. The fan motor is secured to a motor supporting plate mounted on the rear wall of the chassis and the vibrational movements of the fan motor are transmitted to the motor supporting plate and from there to the chassis. The high magnitude vibrations of the fan motor cause the chassis rear wall to operate as a diaphragm and structural noise to generate.

In the state of the art, generally rubber vibration absorbers are used to prevent the noise of the fan motor at the rear of the oven; however, rubber absorbers occupy much space and are damaged by melting due to the high temperatures inside the oven and lose their attenuation features.

In the state of the art Japanese Patent Document No JP60000225, a heating cooker is described, wherein the stability against vibration and shock caused by the rotary body, on which the cooked foodstuff is placed, is enhanced.

In the state of the art Japanese Patent Document No JP59027136, a heating cooker is described, wherein the noise generated by the fan motor is reduced. The fixing fitment, whereto the fan motor is connected, is joined to the insulating board by means of a spaced vibration absorbing cushion having an elastic structure.

In the state of the art the United States of America Patent Document No US5990467, a microwave oven wherein the mounting of the motor actuating the blower fan that cools the microwave devices onto the body by means of a fixing rod is explained.

US 1 901 474 A discloses a support for an electric motor with a base plate with lugs for mounting the motor by means of bars fixed to the lugs. Rubber washers between the bars and the lugs reduce the transmission of vibrations from the motor to the base plate. The base plate comprises lug holes for mounting the lugs.

DE 24 0 294 A1 is considered the closest prior art and discloses an oven with fan motor mounted on a mounting plate outside of the heating chamber. The mounting plate comprises cut-outs in the periphery of mounting holes for the fan motor.

The aim of the present invention is the realization of an oven wherein the noise originated from the fan motor, which provides the circulation of the hot air, is reduced.

The oven realized in order to attain the aim of the present invention is explicated in the claims.

The oven comprises a fan providing the circulation of the hot air inside the heating chamber, wherein the baking process is made. The fan is driven by a motor, which is mounted onto the exterior of heating chamber rear wall and therefore not affected by the heat inside the heating chamber. The lugs carrying the motor are mounted to a fan motor mounting plate by connecting elements such as screws and the plate is mounted on the heating chamber rear wall.

The oven of the present invention comprises cut-outs, which are disposed on the plate, and formed by partially cutting the periphery of the regions, where the lug mounting holes to which the motor lugs are connected are situated, provide these regions to stay connected to the plate and to the motor lugs to spring on the plate.

More than one assembly hole disposed between the lug mounting holes and arranged to form a circle around the shaft hole are also disposed on the plate and in an embodiment of the present invention, the cut-out peripherally encircles the regions wherein the lug mounting holes are disposed as well as the assembly holes.

Depression formed supports extending to the heating chamber rear wall and supporting thereon, provided by shaping the plate, and protuberance formed platforms whereon the motor lugs are seated, provided by shaping the plate, are disposed on the plate. In another embodiment of the present invention, cut-outs are formed on the plate, which partially encircle the sides of the platforms alone or the sides of the platforms and the supports together.

Platforms and/or supports stay connected to the plate from their neck portions along their uncut edges, spring by moving respectively according to the plate along their edges, peripheries of which are emptied, and attenuate the motor vibrations.

In the present invention, U or C formed cut-outs partially encircling the periphery of the platforms are formed on the plate, the ends of the U or C formed cut-outs face the shaft hole in the middle of the plate and the region between the ends of the U or C forms is the neck portion providing the platforms to stay connected to the plate. Moving in respect to the plate along their outer edges, the platforms spring by means of the cut-outs encircling the outer edges and therefore separating them from the plate.

In another embodiment of the present invention, U or C formed cut-outs are formed on the plate both around the platforms and the supports. The ends of the U or C formed cut-outs face the shaft hole, the side by side arranged ends form a clover leaf looking closed curve shape joining with each other. Moving in respect to the plate along their outer edges, the platforms and supports spring by means of the cut-outs encircling the outer edges and therefore separating them from the plate.

In another embodiment of the present invention, the curls increasing the springiness of the supports and/or platforms in the neck portions, which face the shaft hole of the supports and/or platforms and wherein they are connected to the plate and formed by bending the neck portion, are disposed on the plate. The curls increase the vibration attenuating ability of the supports and platforms.

The oven realized in order to attain the aim of the present invention is illustrated in the attached figures, where;
Figure 1 - is the schematic view of an oven.
Figure 2 - is the schematic view of the motor mounting plate connected with the fan motor from the side where the motor is connected.
Figure 3 - is the schematic view of the motor mounting plate connected with the fan motor in an embodiment of the present invention.
Figure 4 - is the schematic view of the motor mounting plate connected with the fan motor in another embodiment of the present invention.

The elements illustrated in the figures are numbered as follows:
1 - Oven
2 - Heating chamber
3 - Fan
4 - Rear wall
5 - Fan motor
6 - Lug
7 - Plate
8 - Shaft hole
9 - Lug mounting hole
10 - Assembly hole
11 - Cut-out
12 - Platform
13 - Support
14 - Curl

The oven (1) comprises a heating chamber (2) wherein the baking process is made, a heater disposed in the heating chamber (2), a fan (3) providing the circulation of the hot air in the heating chamber, a rear wall (4) covering the back side of the heating chamber (2), a fan motor (5) mounted onto the exterior of the heating chamber rear wall (4) and providing the fan (3) in the heating chamber to rotate, more than one lug (6) carrying the fan motor (5) and enabling it to be mounted, a fan motor (5) mounting plate (7) connected with the lugs (6) and mounted onto the exterior of the heating chamber rear wall (4).

The plate (7) comprises a shaft hole (8) disposed in the middle of the plate (7) and through which the shaft of the fan motor (5) passes, more than one lug mounting hole (9) arranged to form a circle around the shaft hole (8), providing the lugs (6) to be mounted by screws on the plate (7) and more than one assembly hole (10) providing the plate (7) to connect to the rear wall (4), disposed between the lug mounting holes (9) and arranged to form a circle around the shaft hole (8).

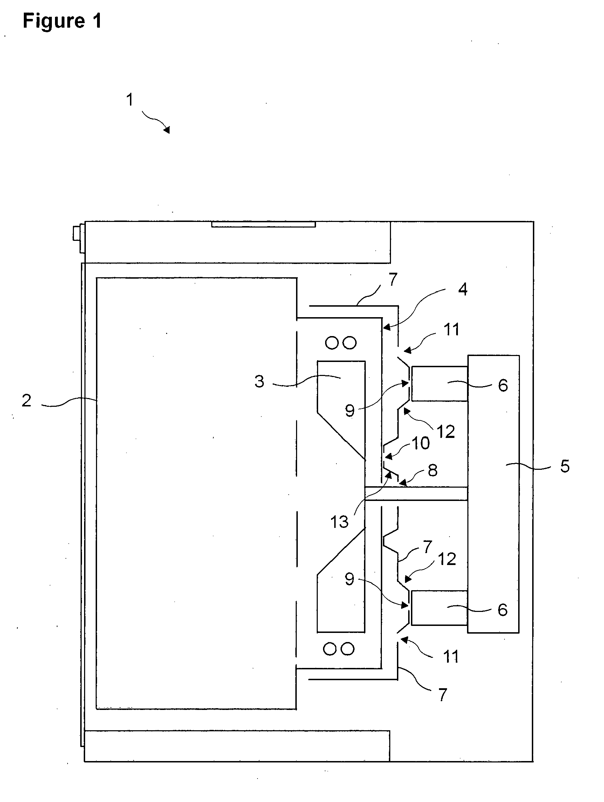

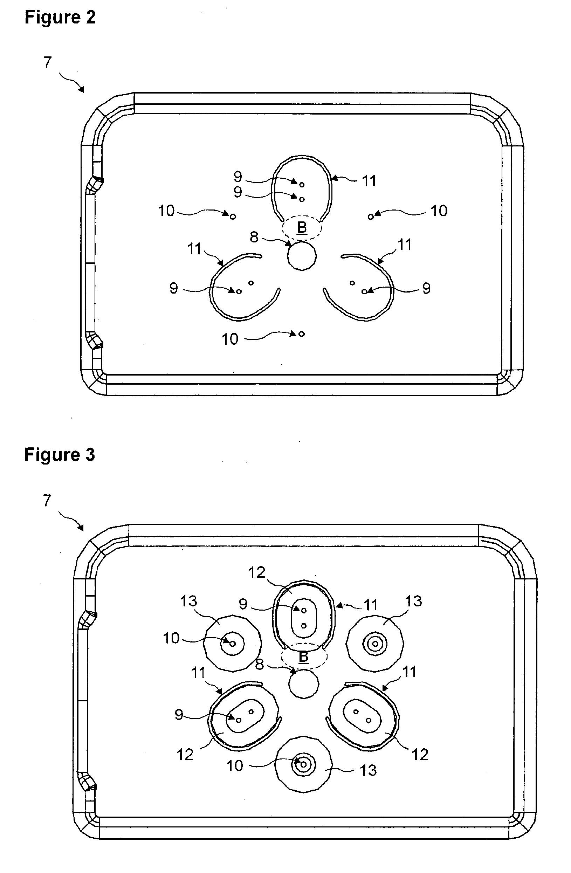

The oven (1) of the present invention comprises one or more cut-outs (11):
- disposed on the plate (7),
- formed by partially cutting the periphery of the regions where the lug mounting holes (9) are situated,
- providing the regions, where lug mounting holes (9) are situated, to stay connected to the plate (7) by creating a neck portion (B) on the uncut edges of these regions, and
- providing the regions, where the lug mounting holes (9) are situated, to serve as a spring by moving with respect to the plate (7) along their truncated edges and providing the lugs (6) to spring on the plate (7) (Figure 1, 2).

In the oven of the present invention, the lugs (6) of the fan motor (5) are connected to the plate (7) by means of the lug mounting holes (9) and the plate (7) is connected to the rear wall (4) by means of the assembly holes (10), the cut-outs (11) around the lug mounting holes (9) provide the regions, where the lug mounting holes (9) are situated, to spring during the operation of the fan motor (5) and the vibrations of the fan motor (5) to be attenuated by making a spring effect.

In the present invention, on the plate (7), cut-outs (11) are provided around the regions, where the assembly holes (10) are situated, as well as around the regions, where the lug mounting holes (9) are situated. Thus, both springing of the lugs (6) on the plate (7) and springing of the plate (7) on the rear wall (4) are provided and the vibration attenuating ability of the plate (7) is increased.

In the present invention, the plate (7) comprises more than one protuberance formed platform (12) disposed in the regions, where the lug mounting holes (9) are situated, extending from the plate (7) to the lug (6), wherein the lug (6) is seated, formed by shaping the plate (7), and more than one depression formed support (13) disposed in the regions, where the assembly holes (10) are situated, extending from the plate (7) to the rear wall (4) and formed by shaping the plate (7) (Figure1,3,4).

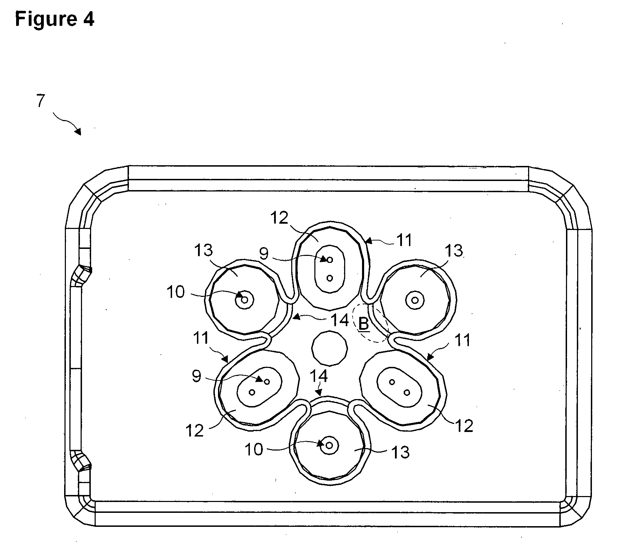

In this embodiment, cut-out (11) is formed by partially cutting the edges of only the platforms (12) or both platforms (12) and supports (13), provides the platforms (12) and supports (13) to stay connected to the plate (7) from their neck portions (B) formed on their uncut edges and to spring by moving with respect to the plate (7) along their truncated edges (Figure 4).

The lugs (6) are connected to the platforms (12) on the plate (7) with connecting elements such as screws by means of the lug mounting holes (9) and the plate (7) is connected to the rear wall (4) by means of the assembly holes (10) in the middle of the supports (13). The surroundings of the platforms (12) or of the platforms (12) and supports (13) are partially emptied with the cut-out (11), therefore a neck portion (B) is formed on one of their edges and they stay connected to the plate (7) by means of their neck portions (B). The platforms (12) or the platforms (12) and supports (13) are therefore embedded to the plate (7) and serve as an absorber spring together with their carrying functions. The platforms (12) and supports (13) attenuate the fan motor (5) vibrations transmitted to the plate (7) and from the plate (7) to the rear wall (4) by springing during the operation of the fan motor (5). Since the plate (7) acquires spring feature by the platforms (12) and supports (13) partially separated from its own body by the cut-outs (11), use of further absorbing elements such as spring or bumper between the lugs (6) and plate (7) or between the plate (7) and rear wall (4) is no longer required.

In the present invention, the cut-out (11) is U or C formed and partially encircles the periphery of the platforms (12). The ends of the U or C formed cut-out (11) face the shaft hole (8) in the middle of the plate (7) and the neck portion (B) is disposed between the ends of the U or C forms (Figure 2). The platforms (12) spring by moving with respect to the plate (7) along their outer edges by means of the cut-outs (11) encircling the outer edges and therefore separating them from the plate (7).

In another embodiment of the present invention, the oven (1) comprises more than one U or C formed cut-out (11) separating the outer edges of the platforms (12) and supports (13) from the plate (7), providing the edges, which face the shaft hole (8) of the platforms (12) and supports (13), to stay connected to the plate (7), the U or C forms' ends of which facing the shaft hole (8) and the side by side arranged ends forming a clover leaf looking closed curve shape joining with each other (Figure 4). The platforms (12) and supports (13) spring by moving with respect to the plate (7) along their outer edges by means of the cut-outs (11) encircling the outer edges and therefore separating them from the plate (7).

In another embodiment of the present invention, the plate (7) comprises one or more curls (14) facing the shaft hole (8) of the platforms (12) and/or supports (13) and disposed in the neck portions (B), wherein they are connected to the plate (7), increasing the springiness in the neck portions (B) (Figure 4). The curl (14) increases the flexibility and vibration attenuating abilities of the platforms (12) and/or supports (13).

In the oven of the present invention, vibrations transmitted from the fan motor (5) to the plate (7) and from the plate (7) to the heating chamber rear wall (4) are reduced by means of the cut-outs (11) formed on the plate (7) and therefore the noise originated from the fan motor (5) is reduced.

## Claims

1. An oven (1) comprising
a) a heating chamber (2), wherein the baking process is made,
b) a fan (3) providing the circulation of the hot air in the heating chamber (2),
c) a rear wall (4) covering the back side of the heating chamber (2),
d) a fan motor (5) mounted onto the exterior of the heating chamber rear wall (4) and providing the fan (3) in the heating chamber (2) to rotate,
e) more than one lug (6) carrying the fan motor (5) and enabling it to be mounted, and
f) a plate (7) connected with the lugs (6), mounted exterior of the heating chamber rear wall (4), having a shaft hole (8) disposed in the middle of the plate (7) and through which the shaft of the fan motor (5) passes and having more than one lug mounting hole (9) arranged to form a circle around the shaft hole (8), providing the lugs (6) to be mounted by screws on the plate (7),
whereby said plate (7) comprises more than one protuberance formed platform (12)
- disposed in the regions, where the lug mounting holes (9) are situated,
- extending from the plate (7) to the lug (6), wherein the lug (6) is seated,
- formed by shaping the plate (7)
whereby said plate (7) comprises more than one assembly hole (10)
- providing the plate (7) to connect to the rear wall (4),
- disposed between the lug mounting holes (9), and
- arranged to form a circle around the shaft hole (8),
**characterized in that** the plate (7) comprises cut-outs (11)
- provided around the regions, where the lug mounting holes (9) are situated
- providing the plate (7) to spring on the rear wall (4),
and **in that** the cut-outs (11):
- are disposed on the plate (7),
- are formed by partially cutting the periphery of the regions where the lug mounting holes (9) are situated,
- provide the regions, where lug mounting holes (9) are situated, to stay connected to the plate (7) by creating a neck portion (B) on the uncut edges of these regions,
- provide the regions, where the lug mounting holes (9) are situated, to serve as a spring by moving with respect to the plate (7) along their truncated edges and providing the lugs (6) to spring on the plate (7) and
- partially encircle the periphery of the platforms (12), having a U or C form, the U or C forms' ends of which facing the shaft hole (8) in the middle of the plate (7), between the U or C forms' ends of which a neck portion (B) is disposed, providing the edges, which face the shaft hole (8) of the platforms (12), to stay connected to the plate (7) and separating the outer edges of the platforms (12) from the plate (7),
and **in that** said plate (7) comprises more than one depression formed support (13)
- disposed in the regions, where the assembly holes (10) are situated,
- extending from the plate (7) to the rear wall (4) and
- formed by shaping the plate (7).

2. An oven (1) as in Claim 1, **characterized by** the cut-out (11) formed by partially cutting the edges of both platforms (12) and supports (13).

3. An oven (1) as in any of the Claims 1 or 2, **characterized by** the cut-outs (11) providing the edges, which face the shaft hole (8) of the platforms (12) and supports (13), to stay connected to the plate (7), having a U or C form, the U or C forms' ends of which are facing the shaft hole (8) and the side by side arranged ends are forming a clover leaf looking closed curve shape joining with each other and are separating the outer edges of the platforms (12) and supports (13) from the plate (7).

4. An oven (1) as in Claims 1 to 3, **characterized by** the plate (7) comprising one or more curls (14) facing the shaft hole (8) of the platforms (12) and/or supports (13) and disposed in the neck portions (B), wherein they are connected to the plate (7), and increasing the springiness in the neck portions (B).

## Patentansprüche

1. Ofen (1), umfassend
a) eine Heizkammer (2), in der der Backvorgang stattfindet,
b) ein Gebläse (3), das für die Zirkulation der Heißluft in der Heizkammer (2) sorgt,
c) eine Rückwand (4), die die Rückseite der Heizkammer (2) abdeckt,
d) einen Gebläsemotor (5), der an der Außenseite der Heizkammerrückwand (4) angebracht ist und dafür sorgt, dass sich das Gebläse (3) in der Heizkammer (2) dreht,
e) mehrere Nasen (6), die den Gebläsemotor (5) tragen und seine Montage ermöglichen, und
f) eine Platte (7), die mit den Nasen (6) verbunden ist und an der Außenseite der Heizkammerrückwand (4) angebracht ist, aufweisend eine Wellenöffnung (8), die in der Mitte der Platte (7) angeordnet ist und durch die die Welle des Gebläsemotors (5) tritt, und aufweisend mehrere Nasenanbringungslöcher (9), die dazu angeordnet sind, einen Kreis um die Wellenöffnung (8) zu bilden, um zu ermöglichen, dass die Nasen (6) mit Schrauben an der Platte (7) angebracht werden,
wobei die Platte (7) mehrere ausgestülpt gebildete Plattformen (12) umfasst,
- die in Regionen angeordnet sind, in denen sich die Nasenanbringungslöcher (9) befinden,
- die sich von der Platte (7) zur Nase (6) erstrecken und in denen die Nase (6) sitzt,
- die durch Formen der Platte (7) gebildet sind,
wobei die Platte (7) mehrere Montagelöcher (10) umfasst,
- die es ermöglichen, dass die Platte (7) mit der Rückwand (4) verbunden wird,
- die zwischen den Nasenanbringungslöchern (9) angeordnet sind,
- die dazu angeordnet sind, einen Kreis um die Wellenöffnung (8) zu bilden,
**dadurch gekennzeichnet, dass** die Platte (7) Ausnehmungen (11) umfasst,
- die um die Regionen herum angeordnet sind, in denen sich die Nasenanbungungslöcher (9) befinden,
- die es ermöglichen, dass die Platte (7) federnd an der Rückwand (4) anliegt,
und **dadurch, dass** die Ausnehmungen (11)
- an der Öffnung der Platte (7) angeordnet sind,
- gebildet sind, indem der Umfang der Regionen, in denen sich die Nasenanbringungslöcher (9) befinden, teilweise weggeschnitten ist,
- es ermöglichen, dass die Regionen, in denen sich die Nasenanbringungslöcher (9) befinden, mit der Platte (7) verbunden bleiben, indem ein Halsabschnitt (B) an den nicht weggeschnittenen Kanten dieser Regionen gebildet wird,
- es ermöglichen, dass die Regionen, in denen sich die Nasenanbringungslöcher (9) befinden, als eine Feder dienen, indem sich sich an ihren beschnittenen Kanten in Bezug auf die Platte (7) bewegen, und es ermöglichen, dass die Nasen (6) federnd an der Platte (7) anliegen, und
- den Umfang der Plattformen (12) mit einer U- oder C-Form teilweise umgeben, wobei die Enden der U- oder C-Formen der Wellenöffnung (8) in der Mitte der Platte (7) zugewandt sind, wobei zwischen den Enden der U- oder C-Formen ein Halsabschnitt (B) angeordnet ist, der es ermöglicht, dass die Kanten, die der Wellenöffnung (8) der Plattformen (12) zugewandt sind, mit der Platte (7) verbunden bleiben, und die Außenkanten der Plattformen (12) von der Platte (7) getrennt werden,
und **dadurch, dass** die Platte (7) mehrere mit Vertiefung gebildete Träger (13) umfasst,
- die in den Regionen angeordnet sind, in denen sich die Montagelöcher (10) befinden,
- die sich von der Platte (7) zur Rückwand (4) erstrecken und
- die durch Formen der Platte (7) gebildet sind.

2. Ofen (1) nach Anspruch 1, **dadurch gekennzeichnet, dass** die Ausnehmung (11) gebildet ist, indem die Kanten sowohl der Plattformen (12) als auch der Träger (13) teilweise weggeschnitten sind.

3. Ofen (1) nach einem der Ansprüche 1 oder 2, **dadurch gekennzeichnet, dass** die Ausnehmungen (11) es ermöglichen, dass die Kanten, die der Wellenöffnung (8) der Plattformen (12) und Träger (13) zugewandt sind, mit der Platte (7) verbunden bleiben, aufweisend eine U- oder C-Form, wobei ihre Enden in U- oder C-Form der Wellenöffnung (8) zugewandt sind und die Seite an Seite angeordneten Enden eine geschlossene Kurvenform bilden, die einem Kleeblatt gleicht, indem sie sich miteinander verbinden, und die Außenkanten der Plattformen (12) und der Träger (13) von der Platte (7) trennen.

4. Ofen (1) nach den Ansprüchen 1 bis 3, **dadurch gekennzeichnet, dass** die Platte (7) eine oder mehrere Bördelungen (14) umfasst, die der Wellenöffnung (8) der Plattformen (12) und/oder Träger (13) zugewandt sind und in den Halsabschnitten (B) angeordnet sind, wobei sie mit der Platte (7) verbunden sind und die Federung in den Halsabschnitten (B) erhöhen.

## Revendications

1. Un four (1) comprenant
a) une chambre de cuisson (2) dans laquelle le processus de cuisson est effectué,
b) un ventilateur (3) permettant la circulation de l'air chaud dans la chambre de cuisson (2),
c) une paroi arrière (4) recouvrant la face arrière de la chambre de cuisson (2),
d) un moteur de ventilateur (5) monté sur la face extérieur de la paroi arrière (4) de la chambre de cuisson et permettant au ventilateur (3) dans la chambre de cuisson (2) de tourner,
e) plus d'un ergot (6) qui supporte le moteur de ventilateur (5) et lui permet d'être monté, et
f) une plaque (7) qui est reliée aux ergots (6), qui est montée à la face extérieure de la paroi arrière (4) de la chambre du cuisson, qui présente un trou d'arbre (8) disposé au centre de la plaque (7) et à travers lequel l'arbre du moteur de ventilateur (5) passe et qui présente plus d'un trou de montage d'ergot (9) arrangé de manière à former un cercle autour du trou d'arbre (8) et permettant aux ergots (6) d'être montés par des vis sur la plaque (7),
où ladite plaque (7) comprend plus d'une plateforme (12) avec une protubérance
- disposée dans les régions où les trous de montage d'ergot (9) sont situés,
- s'étendant à partir de la plaque (7) à l'ergot (6) où l'ergot (6) est logé,
- formée en modelant la plaque (7)
où ladite plaque (7) comprend plus d'un trou de montage (10)
- permettant le raccordement de la plaque (7) à la paroi arrière (4),
- disposé entre les trous de montage d'ergot (9), et
- arrangé de manière à former un cercle autour du trou d'arbre (8),
**caractérisé en ce que** la plaque (7) comprend des découpes (11)
- disposées autour des régions où les trous de montage d'ergot (9) sont situés,
- permettant à la plaque (7) de rebondir sur la paroi arrière (4),
et **en ce que** les découpes (11)
- sont disposées sur la plaque (7),
- sont formées en découpant une partie de la périphérie des régions où les trous de montage d'ergot (9) sont situés,
- permettent aux régions, où les trous de montage d'ergot (9) sont situés, de rester connectées à la plaque (7) en formant une partie de col (B) sur les bords non coupés de ces régions,
- permettent aux régions, où les trous de montage d'ergot (9) sont situés, de servir de ressort en se déplaçant par rapport à la plaque (7) le long de ces bords tronqués et permettant aux ergots (6) de rebondir sur la plaque (7) et
- entourent partiellement la périphérie des plateformes (12), présentant une forme en U ou en C, les extrémités des formes en U ou C des celles-là faisant face au trou d'arbre (8) au centre de la plaque (7), entre les extrémités des formes en U ou C desquelles une partie de col (B) est arrangée, permettant aux bords, qui font face au trou d'arbre (8) des plateformes (12), de rester connectés à la plaque (7) et séparant les bords externes des plateformes (12) de la plaque (7),
et **en ce que** ladite plaque (7) comprend plus d'un support (13) en forme de dépression
- disposé dans les régions où les trous de montage (10) sont situés,
- s'étendant à partir de la plaque (7) vers la paroi arrière (4) et
- formée en modelant la plaque (7).

2. Un four (1) selon la Revendication 1, **caractérisé par** la découpe (11) formée en découpant partiellement les bords des deux plateformes (12) et supports (13).

3. Un four (1) selon l'une quelconque des revendications 1 ou 2, **caractérisé par** les découpes (11) permettant aux bords, qui font face au trou d'arbre (8) des plateformes (12) et des supports (13), de rester connectés à la plaque (7), ayant une forme en U ou en C, les extrémités en U ou C faisant face au trou d'arbre (8) et les extrémités situées côte à côte forment une courbe fermée en forme de trèfle, joignant les unes aux autres et séparant les bords externes des plateformes (12) et supports de la plaque (7).

4. Un four (1) selon les revendications de 1 à 3, **caractérisé par** la plaque (7) comprenant une ou plusieurs boucles (14) qui font face le trou d'arbre (8) des plateformes (12) et/ou des supports (13) et qui sont arrangées dans les parties de col (B), où elles sont reliées à la plaque (7), et augmentant l'élasticité des parties de col (B).
